# FASCICULE DE BREVET EUROPEEN

(11) **EP 2 936 886 B1**
(45) Date de publication et mention de la délivrance du brevet: **22.01.2020**
(21) Numéro de dépôt: 13820730.3
(22) Date de dépôt: 19.11.2013
(51) Int. Cl.: H04W 52/02

(54) **PROCEDE PERMETTANT D'ETABLIR UNE STRATEGIE D'ECONOMIE D'ENERGIE DE BATTERIE DE TERMINAUX MOBILES**
VERFAHREN ZUR ERSTELLUNG EINER STRATEGIE ZUR EINSPARUNG DER ENERGIE VON BATTERIEN EINES MOBILEN ENDGERÄTS
METHOD FOR ESTABLISHING A STRATEGY FOR SAVING THE ENERGY OF MOBILE TERMINAL BATTERIES

(30) Priorité: 21.12.2012 FR 1203572
(43) Date de publication de la demande: 28.10.2015
(73) Titulaire: Airbus DS SAS, 78990 Elancourt (FR)
(72) Inventeur: GRUET, Christophe, F-78180 Montigny le Bretonneux (FR); GEORGEAUX, Eric, F-78180 Montigny Le Bretonneux (FR); GROMAT, Hervé, F-78180 Montigny le Bretonneux (FR); PONS MASBERNAT, Xavier, F-78180 Montigny le Bretonneux (FR); NAVINER, Lirida, F-93150 Le Blanc Mesnil (FR)
(74) Mandataire: Cabinet Camus Lebkiri
(86) Numéro de dépôt international: PCT/EP2013/003489
(87) Numéro de publication internationale: WO 2014/094953

(56) Documents cités:
- EP-A1- 1 959 621
- EP-A1- 1 991 025
- HUI-LING JIA ET AL: "A power threshold based policy for vertical handoff in heterogeneous networks", WIRELESS COMMUNICATIONS, NETWORKING AND MOBILE COMPUTING, 2005. PROCEE DINGS. 2005 INTERNATIONAL CONFERENCE ON WUHAN, CHINA SEPT. 23-26, 2005, PISCATAWAY, NJ, USA,IEEE, vol. 2, 23 septembre 2005 (2005-09-23), pages 1052-1055, XP010856329, DOI: 10.1109/WCNM.2005.1544233 ISBN: 978-0-7803-9335-6

## Description

### Domaine de l'invention

La présente invention concerne un procédé permettant d'établir une stratégie d'économie d'énergie de batterie de terminaux mobiles. L'invention trouve des applications particulièrement avantageuses pour les systèmes mobiles numériques privés de radiocommunication professionnelle, dit PMR (pour Private Mobile Radio ou Professional Mobile Radio, en anglais). L'objet de l'invention trouve un intérêt supplémentaire pour les terminaux sans fils, dit mobiles, destinés aux très hauts débits, telles que les technologies larges bandes, basées sur du LTE (pour Long Term Evolution), ou de la 4G (pour 4^{ème} Génération de réseau cellulaire).

### Etat de la technique et problèmes techniques rencontrés

Dans le domaine des systèmes numériques privés de radiocommunication mobile, appelé par la suite système PMR, il existe un besoin de faire évoluer des réseaux PMR basés sur des technologies bas débit (ou Narrowband, en anglais), et issus d'une génération dépassée (ou legacy, en anglais), en des réseaux PMR basés sur des technologies haut débit (ou Broadband, en anglais), voire du très haut débit. Par réseau PMR basé sur du bas débit, on entend un réseau de technologie TETRA, ou TETRAPOL, ou P25. Par réseau PMR basé sur du haut débit, on entend un réseau de technologie IP-WAN. Par réseaux IP-WAN, on entend des réseaux se basant sur les technologies WIFI (Wlreless Fldelity), et/ou WIMAX (Worldwide Interoperability for Microwave Access), et/ou 2G (2^{ème} Génération de réseau cellulaire), et/ou 3G (3^{ème} Génération de réseau cellulaire), et/ou LTE (Long Term Evolution), 4G (4^{ème} Génération) et/ou de futures technologies.

Cette évolution a pour but de permettre l'intégration de nouveaux services basés sur IP (ou Internet Protocol, en anglais), mais également de continuer à supporter les services de réseaux PMR issus de générations précédentes, tels que la radio, ainsi que l'ensemble des interfaces.

Toutefois, dans le cadre de l'évolution de tel réseau PMR sur du très haut débit mobile, tel que de la LTE, ou de la 4G, le problème le plus critique rencontré, est la faible durée de vie des batteries des terminaux utilisant les technologies précédemment citées.

Le document intitulé « A power threshold based policy for vertical handoff in heterogeneous networks" de HUI-LING Jia et al, DOI : 10.1109/WCNM.2005.1544233 est connu de l'état de la technique.

Il existe donc un besoin de déterminer une technique ou un ensemble de techniques permettant de sauvegarder l'énergie issue de chaque batterie de terminal.

### Exposé de l'invention

La présente invention vise à résoudre l'ensemble des inconvénients de l'état de la technique. Pour cela, l'invention propose un procédé permettant d'établir une stratégie d'économie d'énergie de batteries de terminaux mobiles, selon l'une quelconque des caractéristiques de la revendication 1 et des revendications suivantes, permettant un meilleur stockage de l'énergie sur la base du niveau de batterie de chaque terminal, afin de réduire la consommation d'énergie de l'ensemble du système de télécommunication PMR de type LTE ou 4G.

L'objet de l'invention est basé sur le concept de partage de batterie, qui vise à augmenter la durée de vie des batteries pour ces terminaux PMR qui ont une utilités importantes, comme par exemple le terminal d'un chef de groupe tel que celui de la police, des pompiers, ou autres . Cette technique se base sur la détection de réseaux voisins et/ou de nœuds voisins. Cette détection est facilitée par la réitération d'une sélection (ou resélection) de cellules et d'une procédure de Handover (ou l'abréviation HO)/Vertical Handover (ou l'abréviation VHO), tout en relayant et en faisant coopérer la transmission ainsi que la réception. Ces techniques selon l'invention ont pour but d'améliorer les communications ainsi que leurs durées, afin d'une part de permettre une meilleure gestion de la batterie de chaque terminal et d'autre part agrandir la couverture dans les zones non desservies par un réseau (encore appelé dans le jargon zone « noire »).

### Brève description des figures

L'invention sera mieux comprise à la lecture de la description qui suit et à l'examen des figures qui l'accompagnent. Celles-ci ne sont présentées qu'à titre illustratif, mais nullement limitatif de l'invention. Les figures montrent :

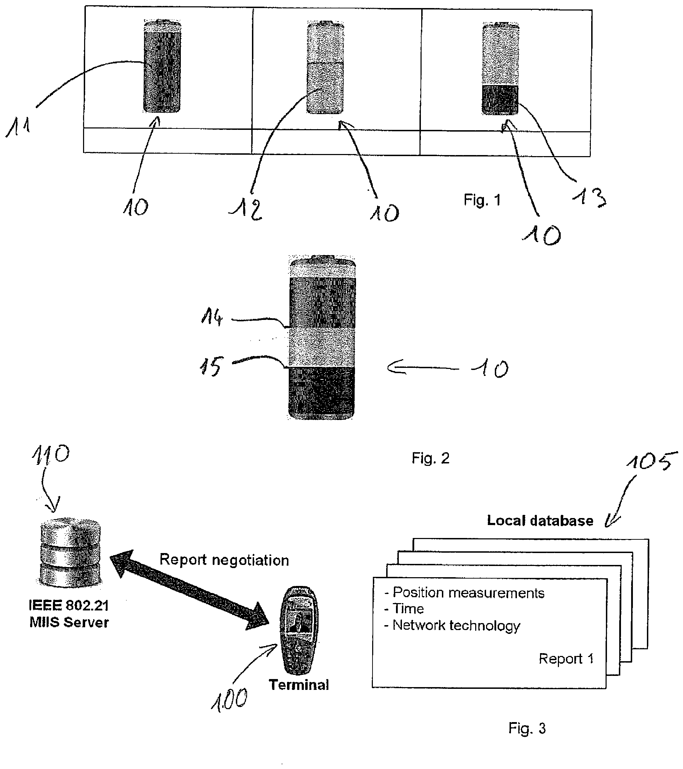

- Figures 1-2 : des représentations schématiques d'une batterie de terminal, selon l'état de la technique ;

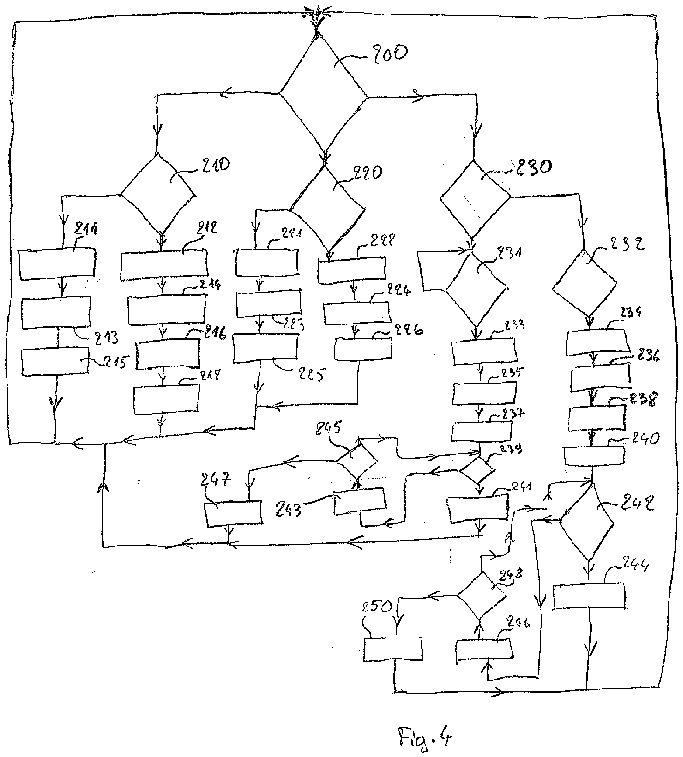

- Figure 3 : une représentation schématique du système, selon un mode de réalisation de l'invention, permettant la mise en œuvre du procédé selon la figure 4 ;
- Figure 4 : un diagramme fonctionnelle du fonctionnement du procédé, selon un mode de réalisation de l'invention ;

### Description de l'invention

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

L'invention qui sera ci-après décrite a pour but de permettre une détection de réseaux ainsi que de nœuds voisins, et cela en permettant simultanément une coopération entre la transmission et la réception, en fonction du niveau de batterie d'un terminal. L'invention propose donc une aide à l'amélioration du rendement énergétique, ainsi qu'à l'amélioration de la durée de vie de batteries. Plus particulièrement, les améliorations proposées par l'invention concernent des batteries destinées à des terminaux de technologie de type 4G (pour 4^{ème} Génération de réseau cellulaire) ou LTE (pour Long Term Evolution), ces dits terminaux étant prévus, dans un mode de réalisation préféré, pour une utilisation dite PMR (pour Private/Professional Mobile Radio).

Le but global de l'invention est de permettre une gestion beaucoup plus efficace du niveau de la batterie de chaque terminal, afin que la dite batterie ne soient pas épuisée trop rapidement, lors d'une intervention d'un groupe d'utilisateurs (police, gendarmerie, unité spéciale, pompier, ou tout autre unité d'intervention habilitée à utiliser un tel terminal mobile) sur une zone géographique, par exemple, et qu'elles viennent à manquer d'énergie durant ladite intervention ou lors des prochaines utilisations dudit terminal.

Par conséquent, l'invention permet une gestion de batterie 10 de sorte qu'un terminal disposant d'un niveau élevé 11 de batterie 10 est en charge des activités ou taches les plus consommatrices en énergie, alors qu'un terminal disposant d'un niveau bas 13 de batterie 10 est en charge principalement que de son fonctionnement et essaie de réaliser quelques activités fondamentales.

La présente invention concerne un procédé de détection de réseaux voisins se trouvant aux alentours d'un terminal spécifique. Ce mode de réalisation selon l'invention, est basé sur le standard IEEE 802.21, et permet à un terminal de pouvoir soit resélectionner une nouvelle cellule, soit d'effectuer un handover (ou HO), ou soit d'effectuer un vertical handover (ou VHO). On entend par le terme handover, le fait que dans les systèmes cellulaires de radiocommunication mobile, il soit possible de commuter des moyens de transmission utilisé par une communication sans interruption de cette dernière. Ce terme Handover ou HO sera utilisé dans le reste de la description en faisant référence à cette définition.

De même, on entend par le terme vertical handover, la possibilité pour un système cellulaire de radiocommunication mobile, de commuter des moyens de transmission utilisé par une communication, vers un accès au support d'une autre infrastructure réseau cellulaire, sans interruption de la communication déjà établie. Le terme Vertical Hand Over ou VHO sera utilisé dans le reste de la description en faisant référence à cette définition.

Le standard IEEE 802.21 prévoie des interconnections avec les systèmes IEEE 802, et il prévoie également des interconnections entre les systèmes IEEE 802 et les systèmes non standardisées aux IEEE 802.

Ce standard IEEE 802.21 permet aux utilisateurs et opérateurs mobiles de tirer complètement avantage des réseaux hétérogènes. On entend par réseaux hétérogènes, des réseaux de toutes technologies radio possible WLAN(Wifi), WPAN (Bluetooth), WMAN(Wimax, 3GPP et 3GPP2). Ce dit standard IEEE 802 fournit également une structure efficace pour la détection de réseaux et facilite intelligemment la VHO, en se basant sur l'état des liaisons réseaux actuelles et leurs capacités. Le standard IEEE 802.21 définit des services permettant un Handover de Média Indépendant ou MIH (pour Media Independant Handover), qui interagissent avec la plus haute des couches empilées du protocole, pour faciliter un Handover homogénéisé entre les différents réseaux sans fil localisés dans une zone similaire. Un de ces services est le service d'information de média indépendant ou MIIS (pour Media Independent Information Services), lequel service fournit une structure et un mécanisme correspondant, pour détecter l'existence de réseaux et obtenir des informations concernant les réseaux détectés potentiellement candidats, aux alentours du réseau déjà en service, dans le but d'obtenir plus facilement un Handover vertical. Le serveur MIIS recueille pratiquement toutes les informations statiques concernant les réseaux d'accès candidats. Le changement dynamique des attributs et l'état des paramètres doivent être obtenus en requérant directement un accès aux réseaux respectifs.

Dans le cadre de cette invention, trois types de terminaux sont distingués. Tout d'abord les terminaux disposant d'un niveau élevé 11 de batterie 10, puis les terminaux disposant d'un niveau moyen 12 de batterie 10, et enfin les terminaux disposant d'un niveau faible 13 de batterie 10. Cette distinction est effectuée par l'établissement de deux seuils, dont un seuil haut 14 et un seuil faible 15. Toutefois, pour des facilités de compréhension, le terminal sera dans le reste de la description référencé 100.

Le procédé de fonctionnement, selon un mode de réalisation de l'invention, va maintenant être décrit, et mis en œuvre par l'unité de commande (non représentée) de chaque terminal 100 mobile.

Une telle unité de commande est connue de l'homme du métier et ne fait pas l'objet de notre invention. Une description plus en avant de cette unité de commande est donc inutile. Toutefois, les actions menées par l'unité de commande de chaque terminal 100 sont ordonnées par un microprocesseur (non représenté). Ce microprocesseur produit en réponse aux codes instructions enregistrés dans une mémoire programme (non représentée) des ordres destinés à mettre en œuvre le procédé de l'invention, ainsi que les différents organes associés à ladite unité de commande. La mémoire programme comporte à cet effet, plusieurs zones de programmes, correspondant respectivement à une suite d'étapes.

A une étape 200, l'unité de commande du terminal 100 détermine l'état de sa batterie 10. Si l'état de la batterie 10 indique que cette dernière est chargée à un niveau élevé alors, l'unité de commande exécute une étape 210. Si l'état de la batterie 10 indique que cette dernière est chargée à un niveau moyen alors, l'unité de commande exécute une étape 220. Si l'état de la batterie 10 indique que cette dernière est chargée à un niveau bas alors, l'unité de commande exécute une étape 230. L'état de la batterie ne peut être inclus que dans l'un de ces trois états.

A une étape 210, lorsque la batterie 10 est complètement chargée ou de niveau élevée 11, autrement dit, que le terminal 100 dispose d'une batterie 10 d'un niveau plus élevé que le seuil haut 14 alors, l'unité de commande détermine le mode de fonctionnement de la couche RRC (non représentée) du terminal 100. Si le mode fonctionnement de la couche RRC du terminal 100 est en mise en veille ou RRC_IDLE alors, l'unité de commande exécute une étape 211. Si le mode de fonctionnement de la couche RRC du terminal est connecté ou RRC_CONNECTED alors, l'unité de commande exécute une étape 212.

A l'étape 211, la couche RRC du terminal 100, tel que ceux utilisés pour la technologie LTE, dispose d'un peu de temps alloué afin que son unité de commande effectue une recherche de tous les réseaux disponibles de longues portées, tels que le 3GPP (3rd Génération Partnership Project) et le WIMAX (Worldwide Interoperability for Microwave Access), ou de courtes portées, tels que le Wifi (Wireless Fidelity) et le Bluetooth.

A une étape 213, l'unité de commande du terminal 100 effectue une mise-à-jour de sa base de données 105 locale avec tous les réseaux détectés à l'étape 211, avec leur position, le temps absolu et la technologie du réseau. La position peut notamment être donnée par le terminal, si des systèmes satellites de navigation globale ou GNSS (pour Global Navigation Satellite Systems) sont disponibles ou, plus communément, par l'intermédiaire du système de calcul de position avec le RSS (pour Receiving Signal Strength). Il est également possible de déduire la position du terminal en utilisant la différence de temps observée à l'arrivée TDOA (pour Time Différence Observed of Arrivai). En effet, le terminal mesure les différences de temps entre les voies balises du système WMAN sur lequel il est connecté. Une voie balise étant présente par cellule afin de distribuer la synchro et les informations système. Le report de ces mesures au réseau WMAN permet la détermination de la position du terminal.

Comme la couche RRC du terminal 100 est dans un mode RRC_IDLE, l'unité de commande du terminal 100 doit, pour se connecter au réseau, mettre à jour sa base de données 105 locale.

A une étape 215, l'unité de commande du terminal 100 est apte, de manière autonome, à effectuer une resélection d'une cellule, si ledit terminal 100 trouve un meilleur réseau qui, par exemple, nécessite moins de consommation d'énergie, ou si le terminal 100 se situe au bord d'une cellule sans laisser la couche RRC dans un état de veille.

A une étape 212, la couche RRC du terminal 100 est dans un mode de fonctionnement connecté ou RRC_CONNECTED, l'unité de commande du terminal 100 envoie des messages de données aux autres terminaux 100 appartenant au même groupe d'utilisateur.

A une étape 214, l'unité de commande du terminal 100 alloue un peu de temps pour effectuer une recherche de réseaux potentiellement candidats.

A une étape 216, l'unité de commande du terminal 100 met à jour le serveur MIIS 110 via des notifications d'informations relatives à la disponibilité des réseaux voisins que ladite unité de commande a collecté dans la base de données 105 locale dudit terminal.

A une étape 218, lorsqu'un réseau plus approprié a été détecté parce que celui-ci garantit, par exemple, une même qualité de service pour toutes les porteuses et une moindre consommation d'énergie alors, l'unité de commande du terminal 100 s'engage dans une procédure de Handover initiée par le réseau, tel qu'un passage d'un réseau 3GPP à un autre réseau 3GPP, ou initié directement par l'unité de commande du terminal 100, du fait de la présence de technologies hétérogènes.

A une étape 220, lorsque la batterie 10 est à moitié chargée ou de niveau moyen 12, autrement dit, que le terminal 100 dispose d'un niveau plus élevé que le seuil bas 15, mais plus bas que le seuil haut 14 alors, l'unité de commande détermine le mode de fonctionnement de la couche RRC (non représentée) du terminal 100. Si le mode fonctionnement de la couche RRC du terminal est en mise en veille ou RRC_IDLE alors, l'unité de commande exécute une étape 221. Si le mode de fonctionnement de la couche RRC du terminal est connecté ou RRC_CONNECTED alors, l'unité de commande exécute une étape 222.

A une étape 221, l'unité de commande du terminal 100 effectue une recherche de tous les réseaux disponibles de longues portées, tels que les réseaux 3GPP,WIMAX, Etc.

A une étape 223, l'unité de commande du terminal 100 effectue une mise-à-jour du serveur MIIS 110, par l'envoi de notifications dans sa base de données 105 locale, comme vu précédemment à l'étape 213, mais uniquement en considérant ce sous-ensemble de réseaux détectés réduit.

A une étape 225, facultative, l'unité de commande du terminal 100 effectue également une resélection de cellule, si ledit terminal 100 le considère nécessaire.

A une étape 222, la couche RRC du terminal 100 est dans un mode de fonctionnement connecté ou RRC_CONNECTED, l'unité de commande du terminal 100 envoie des messages de données à tous les terminaux.

A une étape 224, l'unité de commande du terminal 100 détermine tous les réseaux de longues portées disponibles, tels que les réseaux 3GPP, WIMAX, etc...., afin de mettre à jour le serveur de base de données.

A une étape 226, facultative, l'unité de commande du terminal 100 effectue également une procédure de Handover, si ledit terminal 100 le considère nécessaire.

Peu importe leur mode de fonctionnement, lors d'un niveau moyen 12 de la batterie 10, l'unité de commande du terminal 100 est apte à interroger la base de données MIIS 110 pour obtenir un état sur la présence ou non de réseaux sans fil à courte portée se trouvant aux alentours dudit terminal 100.

A une étape 230, lorsque la batterie 10 est insuffisamment chargée ou de niveau faible 13, autrement dit, que le terminal 100 dispose d'un niveau inférieur au seuil bas 15, l'unité de commande détermine le mode de fonctionnement de la couche RRC (non représentée) du terminal 100. Si le mode fonctionnement de la couche RRC du terminal est en mise en veille ou RRC_IDLE alors, l'unité de commande exécute une étape 231. Si le mode de fonctionnement de la couche RRC du terminal est connectée ou RRC_CONNECTED alors, l'unité de commande exécute une étape 232.

A une étape 231, l'unité de commande du terminal 100 n'effectue plus aucune recherche de réseaux voisins, et détermine si l'unité de commande a effectué une resélection de cellules. Si l'unité de commande a effectué une resélection de cellules alors, l'unité de commande requiert à une étape 233 le serveur MIIS 110.

Ainsi, à une étape 235, l'unité de commande envoie la position du terminal 100 à la station de base a laquelle il est connecté, afin de déterminer quels sont les réseaux disponibles dans son voisinage.

A une étape 237, le serveur MIIS 110 transmet à l'unité de commande du terminal 100, une liste de deux ou trois réseaux les plus appropriés.

A une étape 239, l'unité de commande du terminal 100 détermine s'il est possible d'effectuer une procédure de resélection de cellule pour un des réseaux listés à l'étape 237. Si cela est possible, alors à une étape 241, l'unité de commande du terminal 100 effectue une procédure de resélection. Si cela n'est pas possible, alors à une étape 243, l'unité de commande du terminal réitère cette procédure de resélection avec les réseaux restant de la liste. A une étape 245, l'unité de commande détermine si aucune tentative n'a eu de succès avec l'un des réseaux de la liste. Si aucune tentative n'a eu de succès alors, à une étape 247, l'unité de commande du terminal effectue lui-même un scannage de réseaux, de la même manière que celui effectué si la batterie était pleine.

A une étape 232, la couche RRC du terminal 100 est dans un mode de fonctionnement connecté ou RRC_CONNECTED, l'unité de commande du terminal 100 n'effectue plus aucune recherche de réseaux voisins, et détermine si l'unité de commande a effectué une resélection de cellules.

A une étape 234, si l'unité de commande du terminal 100 a effectué une resélection de cellules, alors l'unité de commande requiert le serveur MIIS 110.

A une étape 236, l'unité de commande du terminal 100 envoie des messages de données aux autres terminaux.

A une étape 238, l'unité de commande requiert au serveur MIIS 110 les réseaux disponibles à proximité de sa position.

A une étape 240, la base de données MIIS 110 transmet une liste de deux ou trois réseaux les plus appropriés pour que le terminal 100 puisse s'y connecter.

A une étape 242, l'unité de commande du terminal 100 détermine s'il est possible d'effectuer une procédure de Handover pour un des réseaux listés à l'étape 240. Si cela est possible, alors à une étape 244, l'unité de commande du terminal 100 effectue une procédure de Handover. Si cela n'est pas possible, alors à une étape 246, l'unité de commande du terminal 100 réitère cette procédure de Handover avec les réseaux restant de la liste. A une étape 248, l'unité de commande du terminal 100 détermine si aucune tentative n'a eu de succès avec l'un des réseaux de la liste. Si aucune tentative n'a eu de succès avec l'un des réseaux de la liste, alors, à une étape 250, l'unité de commande du terminal 100 effectue directement un scannage de réseaux, de la même manière que celui effectué si la batterie était pleine. Il est possible également que la procédure de Handover s'engage avant la transmission, afin que le terminal 100 puisse être connecté au réseau avec le rendement en énergie le plus optimum possible, durant la totalité de la transmission, ou durant la transmission, si l'environnement a changé durant la transmission de données ou la délivrance de données en temps réel.

Dans ce mode de réalisation de l'invention, tel que décrit précédemment, lorsque la batterie 10 d'un terminal 100 est à un niveau faible 13, l'unité de commande dudit terminal 100 permet d'effectuer seulement des activités essentielles, aussi bien pour les besoins de Handover/Vertical Handover, ou de resélection de cellule, mais toujours en requérant le serveur MIIS 110. Ce serveur MIIS 110 est mis à jour de manière périodique, par l'unité de commande d'un terminal 100 disposant dans le groupe de terminaux 100 de la plus grande capacité d'énergie. Au moyen du procédé selon l'invention, un compromis est effectué entre tous les terminaux 100 du groupe de communication privé, de sorte qu'on obtient « une batterie partagée », où les terminaux 100 qui disposent d'un niveau plus élevé de batterie, effectuent des tâches pour l'ensemble global des terminaux 100, alors que les terminaux 100 disposant d'une batterie 10 de niveau faible 13 profitent des tâches effectuées par les terminaux 100 disposant d'une batterie 10 chargée à un niveau élevé 11. Tous les terminaux 100 disposent d'une batterie 10 qui passe d'un état complètement chargé à un état faiblement chargé et de fait, tôt ou tard, chaque terminal 100 profite des tâches effectuées par les autres terminaux 100.

## Revendications

1. Procédé permettant d'établir une stratégie d'économie d'énergie de batterie (10) d'un terminal (100) mobile appartenant à un même groupe d'utilisateurs, de sorte à permettre une utilisation radio mobile privée et/ou professionnelle de ces dits terminaux (100), les étapes suivantes s'enchaînant pour chaque terminal dudit groupe :
- on détermine (200) l'état de charge de la batterie (10) :
∘ lorsque la batterie (10) est complètement chargée, on détermine (210) le mode de fonctionnement de la couche RRC du terminal (100) :
▪ lorsque le mode de fonctionnement de la couche RRC du terminal est en mise en veille, alors :
• on effectue une recherche (211) de tous les réseaux disponibles de longue portées, ou de courtes portées ;
▪ lorsque le mode de fonctionnement de la couche RRC du terminal (100) est connecté, alors :
• on envoie (212) des messages de données aux autres terminaux (100) appartenant au même groupe d'utilisateurs ;
• on met-à-jour (216) un serveur «Media Independent Information Services» MIIS (110) via des notifications d'informations relatives à la disponibilité des réseaux voisins qui ont été collectés dans la base de données (105) locale dudit terminal (100) ;
• lorsqu'un réseau plus approprié a été détecté on s'engage (218) dans une procédure de Handover initiée soit par le réseau, ou soit directement par l'unité de commande du terminal (100) ;
∘ lorsque la batterie (10) est à moitié chargée, alors on détermine (220) le mode de fonctionnement de la couche RRC du terminal (100) :
▪ lorsque le mode de fonctionnement de la couche RRC du terminal (100) est en mise en veille, alors :
• on effectue (221) une recherche de tous les réseaux disponibles de longue portées ;
▪ lorsque le mode de fonctionnement de la couche RRC du terminal (100) est connecté, alors :
• on envoie (222) des messages de données à tous les terminaux (100) ;
• on détermine (224) tous les réseaux de longues portées disponibles, afin de mettre à jour le serveur de base de données ;
• on effectue une procédure de Handover (226), si le terminal (100) le considère nécessaire ;
∘ Lorsque la batterie (10) est insuffisamment chargée, on détermine (230) le mode de fonctionnement de la couche RRC du terminal (100) :
▪ lorsque le mode de fonctionnement de la couche RRC du terminal (100) est en mise en veille, alors :
• on détermine (231) si une resélection de cellule a eu lieu ;
• lorsqu'une resélection de cellules a eu lieu alors, on requiert (233) le serveur MIIS (110) ;
• on envoie (235) la position du terminal (100) à la station de base à laquelle il est connecté, afin de déterminer quels sont les réseaux disponibles dans son voisinage ;
• on détermine (239) s'il est possible d'effectuer une procédure de resélection de cellule pour un des réseaux les plus approprié listé (237) par le serveur MIIS :
∘ lorsqu'une procédure de resélection de cellule peut être effectuée, alors on effectue (241) cette procédure de resélection ;
∘ lorsque la procédure de resélection de cellule ne peut être effectuée, alors on réitère (243) cette procédure de resélection avec les réseaux les plus appropriés restant, qui ont été listés (237) ;
∘ lorsqu'aucune tentative de resélection de réseaux présent dans la liste n'a eu de succès alors, on effectue (247) un scannage de réseaux, similaire à celui effectué lorsque la batterie (10) est pleine ;
▪ lorsque le mode de fonctionnement de la couche RRC du terminal (100) est connecté, alors :
• on n'effectue plus aucune recherche de réseaux voisins, et on détermine (232) si une resélection de cellules a été effectuée :
∘ lorsqu'une resélection de cellules a été effectuée, alors on requiert (234) le serveur MIIS (110) ;
∘ on envoie (236) des messages de données aux autres terminaux ;
∘ on requiert (238) au serveur MIIS (110) les réseaux disponibles à proximité de sa position ;
∘ on détermine s'il est possible d'effectuer une procédure de Handover pour un des deux ou trois réseaux les plus appropriés, qui ont été listés (240) par la base de données MIIS (110), pour que le terminal (100) puisse s'y connecter :
▪ lorsqu'une procédure de Handover est possible, alors à une étape (244), l'unité de commande du terminal (100) effectue une procédure de Handover ;
▪ lorsqu'une procédure de Handover n'est pas possible, alors à une étape (246), l'unité de commande du terminal (100) réitère cette procédure de Handover avec les réseaux restant de la liste.
▪ Lorsqu'aucune tentative de Handover n'a eu de succès avec l'un des réseaux de la liste alors, à une étape (250), l'unité de commande du terminal (100) effectue directement un scannage de réseaux,.

2. Procédé selon la revendication 1, **caractérisé en ce que** lorsque l'on effectue une recherche (211) de tous les réseaux disponibles de longues et/ou de courtes portées, alors on effectue une mise à jour (213) de la base de données (105) locale du terminal (100) avec tous les réseaux détectés lors de la recherche (211).

3. Procédé selon l'une quelconque des revendications précédentes, **caractérisé en ce que** l'on effectue une mise-à-jour (223) du serveur MIIS (110), par l'envoi de notifications dans la base de données (105) locale du terminal (100) ;

4. Procédé selon l'une quelconque des revendications précédentes, **caractérisé en ce que** le serveur MIIS (110) est mis-à-jour de manière périodique, par le terminal (100) disposant dans le groupe de terminaux (100) de la plus grande capacité d'énergie.

5. Procédé selon l'une quelconque des revendications précédentes, **caractérisé en ce qu'**une resélection (225) de cellule est effectuée, si le terminal (100) le considère nécessaire.

6. Procédé selon l'une quelconque des revendications précédentes, **caractérisé en ce qu'**une procédure de Handover (226) est effectuée, si le terminal (100) le considère nécessaire.

7. Procédé selon l'une quelconque des revendications précédentes, **caractérisé en ce que** lorsque la batterie (10) est à moitié chargée et quelque soit le mode de fonctionnement, l'unité de commande du terminal (100) est apte à interroger la base de données MIIS (110) pour obtenir un état sur la présence ou non de réseaux sans fil à courte portée se trouvant aux alentours dudit terminal (100).

8. Procédé selon l'une quelconque des revendications précédentes **caractérisé en ce qu'**il est configuré de sorte à permettre l'obtention d'une batterie partagée, où les terminaux (100) qui disposent d'un niveau plus élevé de batterie, effectuent des tâches pour l'ensemble global des terminaux (100), alors que les terminaux (100) disposant d'une batterie (10) de niveau faible (13) profitent des tâches effectuées par les terminaux (100) disposant d'une batterie (10) chargée à un niveau élevé (11).

9. Terminal (100) mobile, configuré de sorte à permettre une utilisation radio mobile privée et/ou professionelle et à mettre en œuvre un procédé selon l'une quelconque des revendications précédentes.

## Patentansprüche

1. Verfahren, das den Aufbau einer Energiesparstrategie für die Batterie (10) eines mobilen Terminals (100) zulässt, das zu einer und derselben Nutzergruppe gehört, derart, dass eine private und / oder professionelle mobile Funknutzung dieser genannten Terminals (100) ermöglicht wird, wobei die folgenden Schritte für jedes Terminal der genannten Gruppe aufeinander folgen:
- Bestimmt wird (200) der Ladezustand der Batterie (10);
∘ wenn die Batterie (10) vollständig aufgeladen ist, wird des Betriebsmodus der Schicht RRC des Terminals (100) bestimmt (210):
▪ wenn der Betriebsmodus der Schicht RRC des Terminals im Standby geschaltet wird, dann:
• wird eine Suche (211) nach allen verfügbaren Netzen mit langer Reichweite oder kurzer Reichweite durchgeführt;
▪ wenn der Betriebsmodus der Schicht RRC des Terminals (100) angeschlossen ist, dann:
• werden die Datendaten an die anderen Terminals (100), die zu derselben Nutzergruppe gehören, gesendet (212);
• wird ein Server "Media Independant Information Services" MIIS (110) über Informationsbenachrichtigungen bezüglich der Verfügbarkeit der benachbarten Netze, die in der lokalen Datenbank (105) des genannten Terminals (100) erfasst wurden, aktualisiert (216);
• wenn ein besser geeignetes Netz entdeckt wird, wird ein Handover-Verfahren, das entweder vom Netz oder direkt von der Steuereinheit des Terminals (100) initiiert wird, eingeleitet (128);
∘ wenn die Batterie (10) zur Hälfte aufgeladen ist, dann wird der Betriebsmodus der Schicht RRC des Terminals (100) bestimmt (220);
▪ wenn der Betriebsmodus der Schicht RRC des Terminals (100) in Standby geschaltet wird, dann:
• wird eine Suche aller verfügbaren Netze mit langer Reichweite durchgeführt (221);
▪ wenn der Betriebsmodus der Schicht RRC des Terminals (100) angeschlossen ist, dann:
• werden die Datennachrichten an alle Terminals (100) gesendet (222);
• werden alle Netze mit verfügbarer langer Reichweite bestimmt (224), um den Server der Datenbank zu aktualisieren;
• wird ein Handover-Verfahren (226) durchgeführt, wenn das Terminal (100) es für notwendig erachtet;
∘ wenn die Batterie (10) unzureichend geladen ist, wird der Betriebsmodus der Schicht RRC des Terminals (100) bestimmt (230);
▪ wenn der Betriebsmodus der Schicht RRC des Terminals (100) im Standby ist, dann:
• wird bestimmt (231), ob eine Zellen-Neuwahl stattgefunden hat;
• wenn eine Zellen-Neuwahl stattgefunden hat, dann wird der Server MIIS (110) angefordert (233);
• wird die Position des Terminals (100) an die Basisstation gesendet (235), an die es angeschlossen ist, um zu bestimmen, welche Netze in seiner Umgebung verfügbar sind;
• wird bestimmt (239), ob es möglich ist, ein Verfahren zur Zellen-Neuwahl für eines der am besten geeigneten Netze, das vom Server MIIS gelistet (237) ist, durchzuführen;
∘ wenn ein Verfahren zur Zellen-Neuwahl durchgeführt werden kann, dann wird (241) dieses Verfahrens zur Zellen-Neuwahl durchgeführt;
∘ wenn das Verfahren zur Zellen-Neuwahl nicht durchgeführt werden kann, dann wird dieses Verfahrens zur Neuwahl mit den am besten geeigneten Netzen, die gelistet wurden (237), wiederholt (243);
∘ wenn kein Versuch zur Neuwahl von in der Liste vorhandenen Netzen erfolgreich war, dann wird ein Scannen von Netzen ähnlich dem durchgeführt (247), das durchgeführt wird, wenn die Batterie (10) voll ist;
▪ wenn der Betriebsmodus der Schicht RRC des Terminals (100) angeschlossen ist, dann:
• wird keinerlei Suche mehr von benachbarten Netzen durchgeführt und es wird bestimmt (232), ob eine Zellen-Neuwahl durchgeführt wurde;
∘ wenn eine Zellen-Neuwahl durchgeführt wurde, dann wird der Server MIIS (110) angefordert (234);
∘ werden die Datennachrichten an die anderen Terminals gesendet (236) ;
∘ werden die verfügbaren Netze beim Server MIIS (100) in der Nähe seiner Position angefordert (238);
∘ wird bestimmt, ob es möglich ist, ein Handover-Verfahren für eines des zwei oder drei am besten geeigneten Netze durchzuführen, die von der Datenbank MIIS (110) gelistet wurden, damit das Terminal (100) sich damit verbinden kann:
▪ wenn ein Handover-Verfahren möglich ist, führt dann die Steuereinheit des Terminals (100) in einem Schritt (244) ein Handover-Verfahren durch;
▪ wenn ein Handover-Verfahren nicht möglich ist, wiederholt die Steuereinheit des Terminals (100) dann in einem Schritt (246) dieses Handover-Verfahren mit den verbleibenden Netzen der Liste.
▪ wenn kein Handover-Versuch mit einem der Netze der Liste Erfolg hatte, führt die Steuereinheit des Terminals (100) dann in einem Schritt (250) direkt ein Scannen der Netze durch.

2. Verfahren gemäß Anspruch 1, **dadurch gekennzeichnet, dass**, wenn eine Suche (211) aller verfügbaren Netze mit langer und / oder kurzer Reichweite durchgeführt wird, dann eine Aktualisierung (213) der lokalen Datenbank (105) des Terminals (100) mit allen Netzen durchgeführt wird, die bei der Suche (211) erkannt werden.

3. Verfahren gemäß irgendeinem der voranstehenden Ansprüche, **dadurch gekennzeichnet, dass** eine Aktualisierung (223) des Servers MIIS (110) durch den Versand von Benachrichtigungen an die lokale Datenbank (105) des Terminals (100) durchgeführt wird.

4. Verfahren gemäß irgendeinem der voranstehenden Ansprüche, **dadurch gekennzeichnet, dass** der Server MIIS (110) periodisch von dem Terminal (100) aktualisiert wird, das in der Terminalgruppe (100) über die größte Energiekapazität verfügt.

5. Verfahren gemäß irgendeinem der voranstehenden Ansprüche, **dadurch gekennzeichnet, dass** eine Zellen-Neuwahl (225) durchgeführt wird, wenn das Terminal (100) es für notwendig erachtet.

6. Verfahren gemäß irgendeinem der voranstehenden Ansprüche, **dadurch gekennzeichnet, dass** ein Handover-Verfahren (226) durchgeführt wird, wenn das Terminal (100) es für notwendig erachtet.

7. Verfahren gemäß irgendeinem der voranstehenden Ansprüche, **dadurch gekennzeichnet, dass**, wenn die Batterie (10) zur Hälfte entladen ist und unabhängig von dem Betriebsmodus, die Steuereinheit des Terminals (100) geeignet ist, die Datenbank MIIS (110) zu befragen, um einen Zustand über das Vorhandensein oder Nicht-Vorhandensein von drahtlosen Netzen mit kurzer Reichweite zu erhalten, die in der Umgebung des genannten Terminals (100) angeordnet sind.

8. Verfahren gemäß irgendeinem der voranstehenden Ansprüche, **dadurch gekennzeichnet, dass** es derart ausgestaltet ist, dass es den Erhalt einer geteilten Batterie zulässt, wobei die Terminals (100), die über ein höheres Batterieniveau verfügen, Aufgaben für die gesamte Gruppe der Terminals (100) durchführen, während die Terminals (100), die über eine Batterie (10) mit niedrigem Niveau (13) verfügen, von den Aufgaben profitieren, die von dem Terminal (100) durchgeführt werden, über eine Batterie (10) verfügen, die auf einem hohen Niveau (11) aufgeladen ist.

9. Mobiles Terminal (100), das derart ausgestaltet ist, dass es eine private und / oder professionelle mobile Funknutzung und das Umsetzen eines Verfahrens gemäß irgendeinem der voranstehenden Ansprüche zulässt.

## Claims

1. Method for establishing a strategy for saving the energy of a battery (10) of a mobile terminal (100) belonging to the same group of users, in such a way as to allow for a private and/or professional mobile radio use of these said terminals (100), the following steps being chained for each terminal of said group:
- the state of the charge of the battery (10) is determined (200):
∘ when the battery (10) is fully charged, the operating mode of the RRC layer of the terminal (100) is determined (210):
▪ when the operating mode of the RRC layer of the terminal is on standby, then:
• a search (211) is carried out of all of the long-range, or short-range, networks available;
▪ when the operating mode of the RRC layer of the terminal (100) is connected, then:
• data messages are sent (212) to the other terminals (100) that belong to the same group of users;
• an MIIS "Media Independent Information Services" server (110) is updated (216) via information notifications concerning the availability of neighbouring networks that were collected in the local database (105) of said terminal (100);
• when a more suitable network has been detected a Handover procedure is started (218) initiated either by the network, or directly by the control unit of the terminal (100);
∘ when the battery (10) is half charged, the operating mode of the RRC layer of the terminal (100) is then determined (220):
▪ when the operating mode of the RRC layer of the terminal (100) is on standby, then:
• a search is carried out (221) of all of the available long-range networks;
▪ when the operating mode of the RRC layer of the terminal (100) is connected, then:
• data messages are sent (222) to all of the terminals (100);
• all of the available long-range networks are determined (224), in order to update the database server;
• a Handover procedure (226) is carried out, if the terminal (100) considers it to be necessary;
∘ When the battery (10) is insufficiently charged, the operating mode of the RRC layer of the terminal (100) is determined (230):
▪ when the operating mode of the RRC layer of the terminal (100) is on standby, then:
• it is determined (231) if a cell reselection has taken place;
• when a cell reselection has then taken place, the MIIS server (110) is required (233);
• the position of the terminal (100) is sent (235) to the base station to which it is connected, in order to determine what are the available networks in its neighbourhood;
• it is determined (239) if it is possible to carry out a cell reselection procedure for one of the most suitable networks listed (237) by the MIIS server:
∘ when a cell reselection procedure can be carried out, then this reselection procedure is carried out (241);
∘ when the cell reselection procedure cannot be carried out, then this reselection procedure is reiterated (243) with the remaining most suitable networks, that were listed (237);
∘ when no network reselection attempt present in the list has succeeded then, a networks scan (247) is carried out, similar to the one carried out when the battery (10) is full;
▪ when the operating mode of the RRC layer of the terminal (100) is connected, then:
• no more searching for neighbouring networks is carried out, and it is determined (232) if a cell reselection was carried out:
∘ when a cell reselection has been carried out, then the MIIS server (110) is required (234);
∘ data messages are sent (236) to the other terminals;
∘ the available networks in the vicinity of its position are required (238) to the MIIS server (110);
∘ it is determined if it is possible to carry out a Handover procedure for one of the two or three most suitable networks, that were listed (240) by the MIIS database (110), so that the terminal (100) can connect to it:
▪ when a Handover procedure is possible, then at a step (244), the control unit of the terminal (100) carries out a Handover procedure;
▪ when a Handover procedure is not possible, then at a step (246), the control unit of the terminal (100) reiterates this Handover procedure with the remaining networks of the list.
▪ When no Handover attempt has been successful with one of the networks of the list then, at a step (250), the control unit of the terminal (100) directly carries out a scanning of the networks.

2. Method according to claim 1, **characterised in that** when a search (211) is carried out for all of the long and/or short-range networks available, an update (213) is then carried out of the local database (105) of the terminal (100) with all of the networks detected during the search (211).

3. Method according to any preceding claim, **characterised in that** an update (223) of the MIIS server (110) is carried out, by the sending of notifications in the local database (105) of the terminal (100);

4. Method according to any preceding claim, **characterised in that** the MIIS server (110) is updated periodically, by the terminal (100) that has in the group of terminals (100) the highest energy capacity.

5. Method according to any preceding claim, **characterised in that** a cell reselection (225) is carried out, if the terminal (100) considers it to be necessary.

6. Method according to any preceding claim, **characterised in that** a Handover procedure (226) is carried out, if the terminal (100) considers it to be necessary.

7. Method according to any preceding claim, **characterised in that** when the battery (10) is half charged and regardless of the operating mode, the control unit of the terminal (100) is able to query the MIIS database (110) in order to obtain a status as to the presence or not of short-range wireless networks that are within the vicinity of said terminal (100).

8. Method according to any preceding claim **characterised in that** it is configured in such a way as to allow for the obtaining of a shared battery, where the terminals (100) that have a higher battery level, carry out tasks for the entire set of terminals (100), while the terminals (100) that have a battery (10) with a low level (13) benefit from the tasks carried out by the terminals (100) that have a battery (10) charged at a high level (11).

9. Mobile terminal (100), configured in such a way as to allow for a private and/or professional mobile radio use and to implement a method according to any preceding claim.
